# EUROPEAN PATENT SPECIFICATION

(11) **EP 3 454 153 B1**
(45) Date of publication and mention of the grant of the patent: **12.10.2022**
(21) Application number: 16901004.8
(22) Date of filing: 31.10.2016
(51) Int. Cl.: G05B 23/02, G05B 19/042

(54) **DATA STORAGE METHOD FOR ELECTRONIC CONTROL SYSTEM OF VEHICLE, AND ELECTRONIC CONTROL SYSTEM**
DATENSPEICHERUNGSVERFAHREN FÜR ELEKTRONISCHES STEUERUNGSSYSTEM FÜR EIN FAHRZEUG UND ELEKTRONISCHES STEUERUNGSSYSTEM
PROCÉDÉ DE STOCKAGE DE DONNÉES POUR SYSTÈME DE COMMANDE ÉLECTRONIQUE DE VÉHICULE, ET SYSTÈME DE COMMANDE ÉLECTRONIQUE

(30) Priority: 03.05.2016 CN 201610285928
(43) Date of publication of application: 13.03.2019
(73) Proprietor: Beijing Electric Vehicle Co., Ltd., Beijing 102606 (CN)
(72) Inventor: HAN, Bin, Beijing 102606 (CN); YU, Jun, Beijing 102606 (CN); DAI, Kangwei, Beijing 102606 (CN); WANG, Liang, Beijing 102606 (CN); ZHAO, Lei, Beijing 102606 (CN); LV, Yujun, Beijing 102606 (CN); CAO, Wenfeng, Beijing 102606 (CN); MA, Lina, Beijing 102606 (CN); TONG, Shimeng, Beijing 102606 (CN)
(74) Representative: Hoffmann, Jürgen
(86) International application number: PCT/CN2016/104120
(87) International publication number: WO 2017/190482

(56) References cited:
- CN-A- 102 323 791
- CN-A- 102 662 397
- CN-A- 102 809 962
- CN-A- 103 279 118
- CN-A- 104 914 849
- CN-A- 105 161 130
- CN-A- 105 785 977
- US-B1- 6 236 917
- US-B1- 6 243 630
- US-B2- 7 068 147
- US-B2- 8 565 962

## Description

### CROSS REFERENCE TO RELATED APPLICATION

The present application claims a priority to Chinese Patent Application Serial No. 201610285928.8 field by BEIJING ELECTRIC VEHICLE CO., LTD., on May 3, 2016 and titled with "Method For Storing Data In Electronic Control System Of Vehicle And Electronic Control System".

### TECHNICAL FIELD

The discloser relates to a field of vehicle technique, and more particularly, to a method for storing data in an electronic control system of a vehicle, and an electronic control system.

### BACKGROUND

At present, in an electronic control system of a vehicle (such as an electric vehicle), several electronic control units are included, such as a vehicle control unit, a motor control unit, a battery management system and the like. The electronic control units perform an information interaction mainly via a bus (such as a controller area network (CAN) bus). However, hardware resources are in a separate state from one control unit to another control unit. Taking a storage to an EEPROM (electrically erasable programmable read only memory) as an example, each control unit respectively stores its required parameters during a working process and during a power-off process.

However, sometimes there is a situation that a failure or an error occurs to the storage to EEPROM when the control unit performs the storage to EEPROM during running or the powered off process. A plurality of reasons may cause the above situation, including for example that a storage cell of the EEPROM is deactivated, a dispatching cycle is disordered due to a large amount of stored data, or data stored in the EEPROM is invalidated resulted from a read/write verification failure, and the like. This may directly lead to an invalidation of reading data such as a key variable, for example an accumulative charging-discharging capacity of the battery management system, a nuclear power state, an endurance mileage and so on, and thus further affect vehicle safety and user experience.

US8565962B2 relates to a rewriting system including a plurality of electronic control units mounted on a vehicle. Each of the plurality of electronic control units include a storage for storing control information and a device for sending new control information to rewrite the control information stored in the storage of the plurality of electronic control units with the new control information, One of the plurality of electronic control units is configured to make a determination whether the rewriting in the other electronic control units has been completed in response to a completion of the rewriting in the one of the plurality of electronic control units, and make a notification of a result of the determination. Therefore, the user can immediately recognize the progress of the rewriting work.

US7068147B2 relates to a control information rewriting system. A function f necessary for the rewriting device to access the ECUs is stored the control center. When data communication is carried out by way of a telephone line network, the control center acquires ID information from the rewriting device and acquires a telephone number of the call origin. When the association relationship between this ID and telephone number matches an association relationship stored in the database, the control center determines the rewriting device to be a legitimate one. Only when the control center determines that the rewriting device is a legitimate one, it transmits the function f to the rewriting device to enable rewriting of control information of the ECUs.

US6243630B1 relates to a vehicle control system, for reducing the number of times learned value data is written into an electrically rewritable non-volatile ROM. The learned value data is saved into the EEPROM and then on battery disconnection, it can be transferred from the EEPROM back to an ordinary RAM instead of being lost. Each time engine rotating speed NE reaches a predetermined value after the ignition switch is turned on, a counter is incremented. When the counter reaches a predetermined count, that time is written into the EEPROM for safe keeping and the counter is reset. Consequently, learned value data is written into the EEPROM in a manner which requires the vehicle to actually run a number of times, thereby making it possible to safely reduce the number of times the learned value data is written into the EEPROM for safe keeping.

### SUMMARY

The present application relates to a method for storing data in an electronic control system of a vehicle according to independent claim 1, an electronic control system of a vehicle according to independent claim 5, a device according to independent claim 9 and a non-volatile computer storage medium according to independent claim 10. Further aspects of the present application are defined by the dependent claims. With embodiments of the present disclosure, each electronic control unit may realize to share hardware resources (such as respective storage units), thereby improving a usage rate of the electronic control system resources, lowering cost and improving reliability of variable storage, effectively reducing a probability of a read/write error to/from EEPROM, and improving reliability of data stored in the EEPROM.

Additional advantages of embodiments of the present disclosure will be given in part in the following descriptions, become apparent in part from the following descriptions, or be learned from the practice of the embodiments of the present disclosure.

### BRIEF DESCRIPTION OF THE DRAWINGS

In order to more explicitly illustrate technical solutions in embodiments of the present disclosure, a brief introduction for the accompanying drawings used in descriptions of the embodiments and prior arts will be listed as follows. Apparently, the drawings described below are only corresponding to some embodiments of the present disclosure.
Fig. 1 is a flow chart of a method for storing data in an electronic control system of a vehicle according to an embodiment of the present disclosure;
Fig. 2 is a first schematic diagram of a storage phase of a method for storing data in an electronic control system of a vehicle according to an embodiment of the present disclosure;
Fig. 3 is a second schematic diagram of a storage phase of a method for storing data in an electronic control system of a vehicle according to an embodiment of the present disclosure;
Fig. 4 is a third schematic diagram of a storage phase of a method for storing data in an electronic control system of a vehicle according to an embodiment of the present disclosure;
Fig. 5 is a fourth schematic diagram of a storage phase of a method for storing data in an electronic control system of a vehicle according to an embodiment of the present disclosure;
Fig. 6 is a fifth schematic diagram of a storage phase of a method for storing data in an electronic control system of a vehicle according to an embodiment of the present disclosure;
Fig. 7 is a sixth schematic diagram of a storage phase of a method for storing data in an electronic control system of a vehicle according to an embodiment of the present disclosure;
Fig. 8 is a seventh schematic diagram of a storage phase of a method for storing data in an electronic control system of a vehicle according to an embodiment of the present disclosure;
Fig. 9 is an eighth schematic diagram of a storage phase of a method for storing data in an electronic control system of a vehicle according to an embodiment of the present disclosure;
Fig. 10 is a ninth schematic diagram of a storage phase of a method for storing data in an electronic control system of a vehicle according to an embodiment of the present disclosure;
Fig. 11 is a first schematic diagram of a read phase of a method for storing data in an electronic control system of a vehicle according to an embodiment of the present disclosure;
Fig. 12 is a second schematic diagram of a read phase of a method for storing data in an electronic control system of a vehicle according to an embodiment of the present disclosure;
Fig. 13 is a third schematic diagram of a read phase of a method for storing data in an electronic control system of a vehicle according to an embodiment of the present disclosure;
Fig. 14 is a fourth schematic diagram of a read phase of a method for storing data in an electronic control system of a vehicle according to an embodiment of the present disclosure;
Fig. 15 is a fifth schematic diagram of a read phase of a method for storing data in an electronic control system of a vehicle according to an embodiment of the present disclosure; and
Fig. 16 is a sixth schematic diagram of a read phase of a method for storing data in an electronic control system of a vehicle according to an embodiment of the present disclosure.

### DETAILED DESCRIPTION

Descriptions will be made in detail to embodiments of the present disclosure. Examples of the embodiments are illustrated in the drawings. The same or similar elements and the elements having same or similar functions are denoted by like reference numerals throughout the descriptions. The embodiments described herein with reference to drawings are exemplary, only used to illustrate the present disclosure, but not construed to limit the present disclosure.

In the description of the present disclosure, it is to be understood that, terms of "first" and "second" are only used for description and cannot be seen as indicating or implying relative importance. In the description of the present disclosure, unless otherwise stipulated and restricted, terms of "linkage" and "connection" shall be understood broadly, for example, it could be fixed connection, detachable connection or integral connection; it could be mechanical connection or electrical connection; it could be direct linkage, indirect linkage via intermediate medium. Those skilled in the art shall understand the concrete notations of the terms mentioned above according to specific circumstances. Furthermore, in the description of the present disclosure, unless otherwise illustrated, a term of "a plurality of' means to two or more than two.

A method for storing data in an electronic control system of a vehicle and an electronic control system according to embodiments of the present disclosure will be described in combination with drawings.

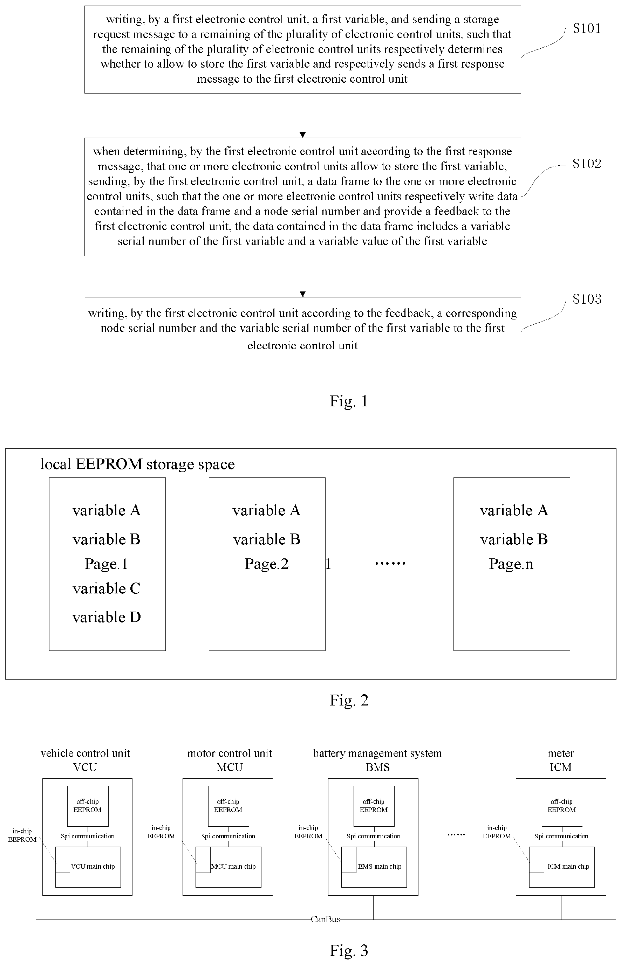

Fig. 1 is a flow chart of a method for storing data in an electronic control system of a vehicle according to an embodiment of the present disclosure.

As illustrated in Fig. 1, a method for storing data in an electronic control system of a vehicle according to an embodiment of the present disclosure is illustrated. The electronic control system includes a plurality of electronic control units. The plurality of electronic control units communicate with each other via a bus, such as communicate with each other via a CAN (controller area network) bus. The method includes the followings.

At block S101, a first variable is written by a first electronic control unit of a plurality of first electronic control units, and a storage request message is sent to a remaining of the plurality of first electronic control units excluding the first electronic unit, such that the remaining of the plurality of first electronic control units excluding the first electronic control unit respectively determines whether to allow to store the first variable and respectively sends a first response message to the first electronic control unit.

At block S102, when it is determined, by the first electronic control unit according to the first response message, that one or more electronic control units allow to store the first variable, a data frame is sent to the one or more electronic control units of the plurality of electronic control units excluding the first electronic control unit, such that the one or more electronic control units of the plurality of electronic control units excluding the first electronic control unit respectively write data contained in the data frame and a node serial number and respectively provide a feedback to the first electronic control unit. The data contained in the data frame includes a variable serial number of the first variable and a variable value of the first variable.

At block S103, a corresponding node serial number and the variable serial number of the first variable are written to the first electronic control unit by the first electronic control unit of the plurality of electronic control units according to the feedback.

Each of the plurality of electronic control units has a respective memory EEPROM, and each of the plurality of electronic control units performs a write operation and a read operation on the respective memory EEPROM. The plurality of electronic control units include, but are not limited to, at least two of a vehicle control unit, a motor control unit, a battery management system and a meter.

An example that first electronic control unit is the vehicle control unit, and remaining of the plurality of electronic control units includes the motor control unit, the battery management system and the meter is taken to illustrate in detail.

A storage management to a local EEPROM of the vehicle control unit is described as follows. A variable A to be stored is stored in different pages of the local EEPROM, as illustrated in Fig. 2, if the first variable (i.e. the variable A) is a specific variable, the fist variable is multi-point stored when the first electronic control unit writes the first variable. That is to say, it is required that the important variable A to be stored are multi-point stored in each page of the local EEPROM, that is, is stored to a plurality of positions, and for the EEPROM, is stored in a plurality of pages of the EEPROM.

An EEPROM resources sharing mechanism among each electronic control unit is described as follows.

An EEPROM remotely writing mechanism is described. A schematic diagram of the electronic control system is illustrated as Fig. 3. Several electronic control units are connected to the CAN bus and each electronic control unit has its own EEPROM hardware resources.

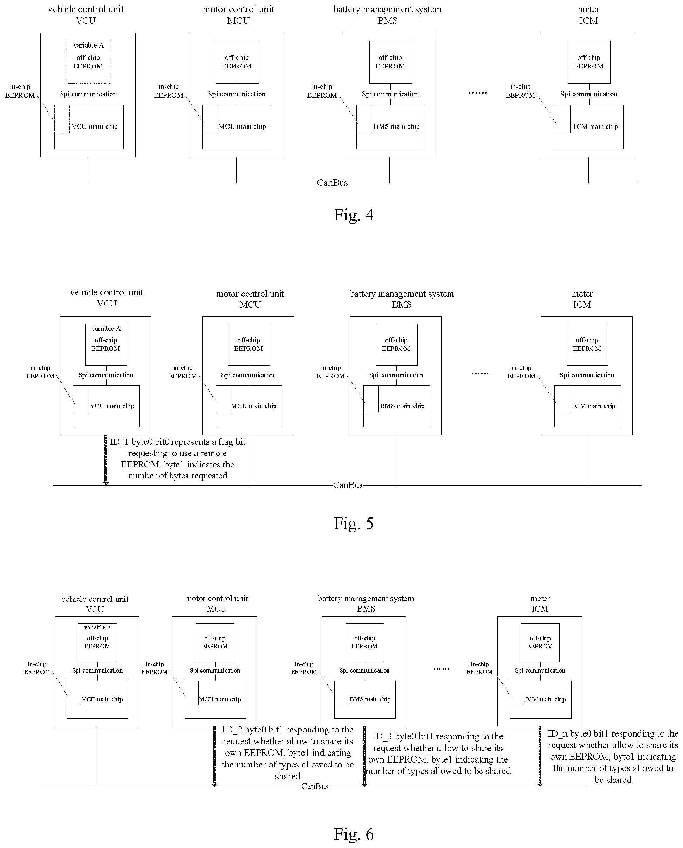

When there is a demand of writing the EEPROM for an electronic control unit, for example, it is desired to store a variable A by the vehicle control unit (VCU), the variable A needs to be stored in the local EEPROM at a corresponding address firstly. If the variable A is an important variable, a multi-page storage is needed. As illustrated in Fig. 4 for example, the variable A is stored in an off-chip EEPROM of the VCU through a serial peripheral interface (spi). At the same time, the VCU may sent a message ID_1 to the bus, where byte0 bit0 is set as 1 to indicate a flag bit requesting to user another control unit's EEPROM, and byte 1 indicates the number of variable's bytes requested to use the EEPROM, ranging from 0 to 255. As illustrated in Fig. 5 for example, the VCU sends an EEPROM writing request to the bus.

When each of control units receives the request message ID_1 sent by the VCU, each of the control units respectively estimates a current control unit state and returns a respective message ID2---ID_n, where byte0 bit1 indicates a response bit, 0 indicates an permission of sharing its own EEPROM resources, and 1 indicates a refusal of sharing the EEPROM, and byte1 indicates the number of bytes allowed to be used by itself. As illustrated in Fig. 6 for example, each of the control units responds to the request of the VCU according to its own condition.

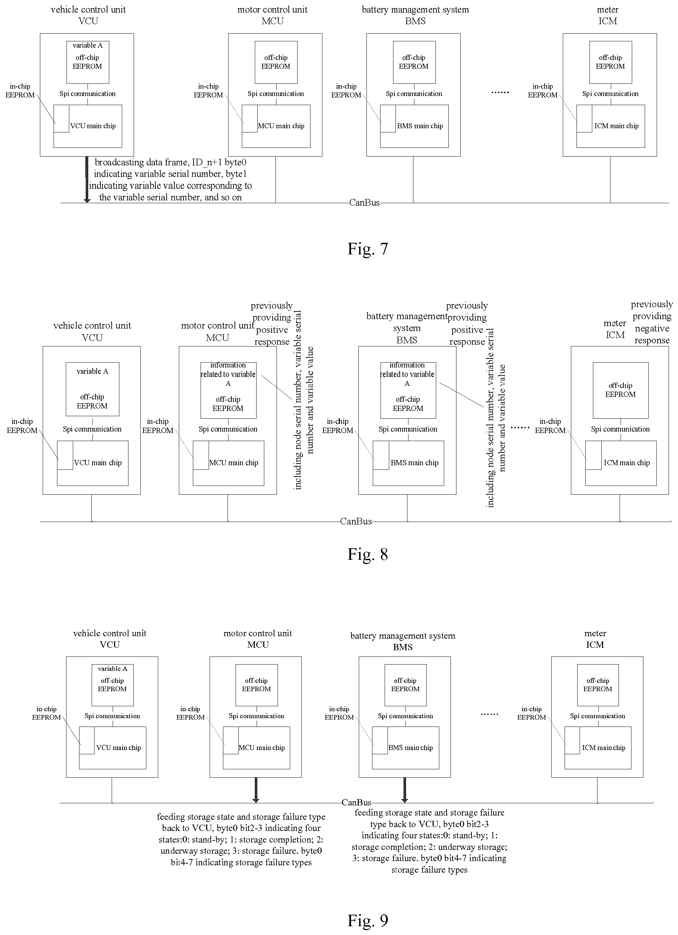

Among response messages sent by the control units and received by the VCU, when there is a positive response, the VCU starts to broadcast a data frame through a message ID_n+1, of which a forma is that byte0 indicates a variable serial number, and byte1 indicates a variable value corresponding to the variable serial number, and so on. As illustrated in Fig. 7 for example, as long as the VCU receives one positive response, the VCU starts to broadcast the data frame over the bus.

After each node previously providing the positive response on the bus receives the data frame, each node starts to request to store the node serial number, the variable serial number and the variable value to its own EEPROM, illustrated as Fig. 8 for example, each node previously providing the positive response on the bus writes related information into its own EEPROM after receiving the data broadcast of the VCU.

During storages by each node, a respective storage situation is fed back to the VCU via a respective ID2---ID_n, where byte0 bit2-3 indicates four storage states including a stand-by state indicated by 0, a storage completion state indicated by 1, a underway storage state indicated by 2 and a storage failure indicated by 3, and byte0 bit4-7 indicates storage failure types. As illustrated in Fig. 9 for example, each node feeds a respective storage state and the storage failure type back to the VCU.

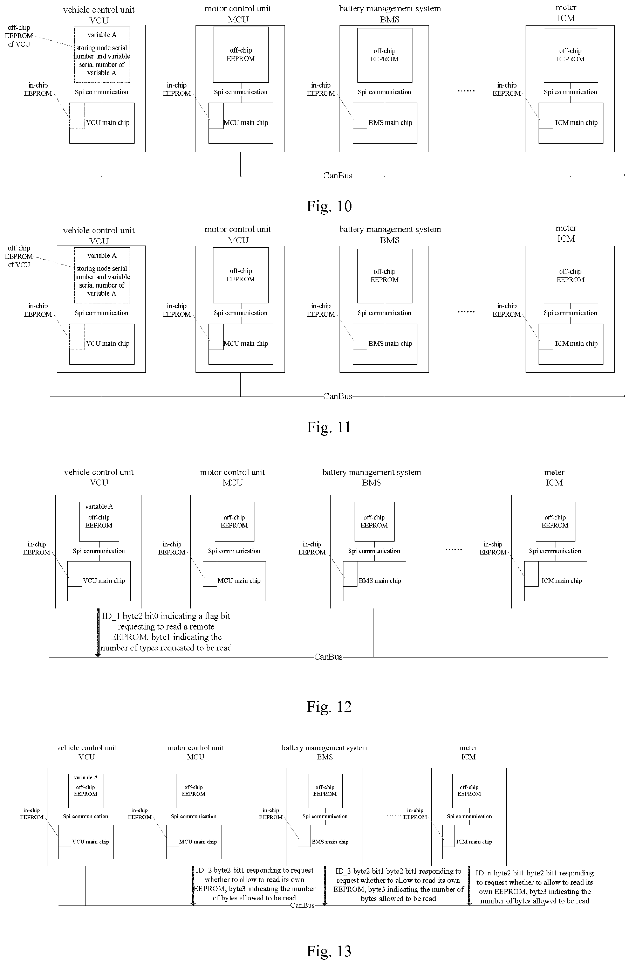

The VCU writes the node serial number and the variable serial number at a neighboring address to its variable address according to the storage situation fed back by each node. As illustrated in Fig. 10 for example, the VCU writes the node serial number and the variable serial number to its own EEPROM according to the storage situation fed back by each node. So far, the EEPROM remotely writing mechanism is described completely.

With the method for storing data in an electronic control system of a vehicle according to embodiments of the present disclosure, each electronic control unit may realize to share hardware resources (such as respective storage units), thereby improving a usage rate of the electronic control system resources, lowering cost and improving reliability of variable storage, effectively reducing a probability of a read/write error to/from EEPROM, and improving reliability of data stored in the EEPROM.

In another example of the present disclosure, the method for storing data in an electronic control system of a vehicle further includes the followings. The node serial number, the variable serial number and the variable value are read by the first electronic control unit of the plurality of electronic control units, and a read request message is sent to the remaining of the plurality of electronic control units excluding the first electronic control unit, such that the remaining of the plurality of electronic control units excluding the first electronic control unit respectively determines whether to allow the first electronic unit to read, and respectively sends a second response message to the first electronic control unit. When it is determined, by the first electronic control unit according to the second response message, that one or more electronic control units of the plurality of electronic control units excluding the first electronic unit allow the first electronic unit to read, the variable serial number is sent to the one or more electronic control units of the plurality of electronic control units excluding the first electronic control unit, such that the one or more electronic control units respectively read a corresponding variable value and respectively provide a feedback to the first electronic control unit. One or more variable values are screened by the first electronic control unit according to one or more feedbacks.

In detail, an example that the first electronic control unit is the vehicle control unit, and the remaining of the plurality of electronic control units includes the motor control unit, the battery management system and the meter is taken to illustrate in detail. That is, a EEPROM remotely read mechanism is described.

When there is a demand of reading the EEPROM for an electronic control unit, for example, it is desired to read the variable A by the VCU, the node serial number, the variable serial number and the variable value of the variable stored are read at a corresponding address from the local EEPROM. If the variable is an important variable, it needs to read the variable from a plurality of pages and performs a validation to ensure reliability. As illustrated in Fig. 11 for example, the VCU firstly read the node serial number, the variable serial number and the variable value of the variable A from its off-chip EEPROM via the spi. At the same time, the VCU may send a message ID_1 to the bus, where byte2 bit0 is set as 1 to indicate a flag bit requesting to read another control unit's EEPROM, and byte3 indicates the number of variable's bytes requested to use the EEPROM, ranging from 0 to 255. As illustrated in Fig. 12 for example, the VCU sends an EEPROM reading request to the bus.

When each control unit receives the request message ID_1 sent by the VCU, each of the control units respectively estimates a current control unit state and returns a respective message ID_2---ID_n, where byte2 bit1 indicates a response bit, 0 indicates an permission of reading its own EEPROM resources, and 1 indicates a refusal of reading the EEPROM, and byte3 indicates the number of bytes allowed to be read by itself. As illustrated in Fig. 13 for example, each of the control units responds to the request of the VCU according to its own condition.

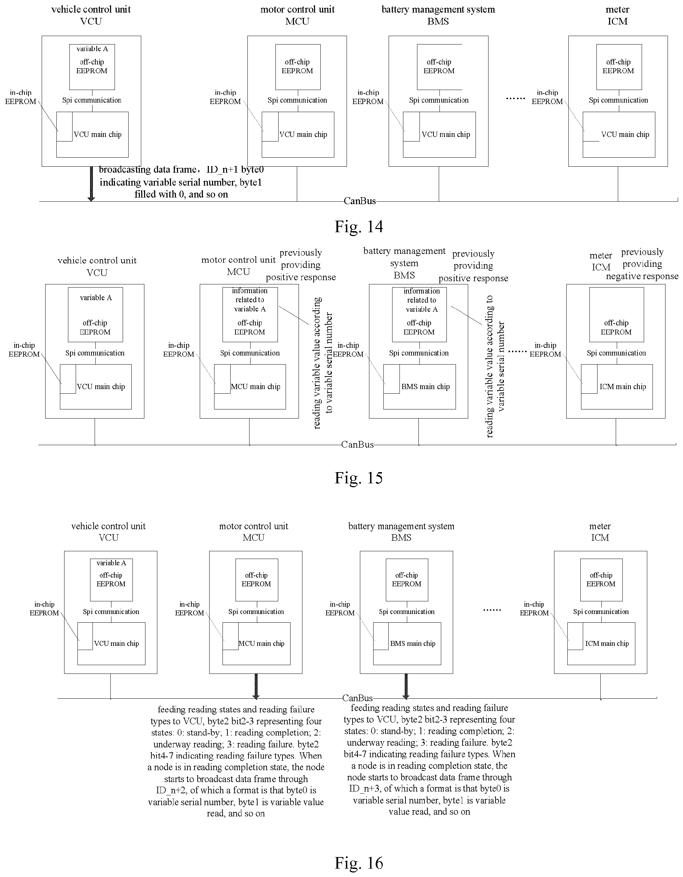

Among response messages sent by control units and received by the VCU, when there is a positive response, the VCU starts to broadcast a data frame through a message ID_n+1, of which a forma is that byte0 indicates a variable serial number, and byte1 indicates 0, and so on. As illustrated in Fig. 14 for example, as long as the VCU receives one positive response, the VCU starts to broadcast the data frame over the bus. The variable serial number needed to be read is broadcasted.

After each node previously providing the positive response on the bus receives the data frame, each node starts to read the variable value from the respective EEPROM to a BUFFER according to the variable serial number requested, as illustrated in Fig. 15 for example, each node previously providing the positive response on the bus writes related information into its own EEPROM after receiving the data broadcasted by the VCU.

When reading by each node, a respective reading situation is fed back to the VCU via a respective ID2---ID_n, where byte2 bit2-3 indicates four reading states including a stand-by state indicated by 0, a reading completion state indicated by 1, a underway reading state indicated by 2 and a reading failure indicated by 3, and byte2 bit4-7 indicates reading failure types. When a node is in the reading completion state, the node starts to broadcast a data frame through the message ID_n+2---ID_n+m, of which a format is that byte0 indicates a variable serial number, byte1 indicates a variable value read, and so on, as illustrated in Fig. 16 for example, each node feeds a respective reading state and the reading failure type back to the VCU. If the reading is completed, the variable serial number read and the variable value read are needed to be sent as well.

The VCU screens the variable value fed back by each node to select a most reliable value for use according to the respective reading situation fed back by each node. So far, the EEPROM remotely reading mechanism is described completely.

In an embodiment of the present disclosure, for an abnormal process, during a storage process and a reading process at each node, it needs to keep monitoring for each node a communication lost condition on the CAN line. When the communication lost occurs to a node, it is represented that a value stored or read to or from the EEPROM at that node is invalid. If a node feeds the reading failure or storage failure back, data of that node is also abandoned.

With the method for storing data in an electronic control system of a vehicle, each electronic control unit may realize to share hardware resources (such as respective storage units), thereby improving a usage rate of the electronic control system resources, lowering cost and improving reliability of variable storage, effectively reducing a probability of a read/write error to/from EEPROM, and improving reliability of data stored in the EEPROM.

Further, an electronic control system of a vehicle according to embodiments of the present disclosure includes a plurality of electronic control units. The plurality of electronic control units communicate with each other via a bus, such as communicates with each other via a CAN bus. A first electronic control unit of the plurality of electronic control units is configured to send a storage request message to a remaining of the plurality of electronic control units excluding the first electronic control unit when writing a first variable, such that the remaining of the plurality of electronic control units excluding the first electronic control unit respectively determines whether to allow to store the first variable and respectively sends a first response message to the first electronic control unit. When the first electronic control unit determines that one or more electronic control units allow to store the first variable according to the first response message, the first electronic control unit is configured to send a data frame to the one or more electronic control units, such that the one or more electronic control units respectively write data contained in the data frame and a node serial number and respectively provide a feedback to the first electronic control unit. The data contained in the data frame includes a variable serial number of the first variable and a variable value of the first variable. The electronic control unit is configured to write a corresponding node serial number and the variable serial number of the first variable to the first electronic control unit according to the feedback.

In an embodiment of the present disclosure, the first electronic control unit is further configured to send a read request message to the remaining of the plurality of electronic control units excluding the first electronic control unit when reading the node serial number, the variable serial number and the variable value, such that the remaining of the plurality of electronic control units excluding the first electronic control unit respectively determines whether to allow the first electronic control unit to read, and respectively sends a second response message to the first electronic control unit. When it is determined, by the first electronic control unit according to the second response message, that one or more electronic control units allow the first electronic control unit to read, the first electronic control unit is configured to send the variable serial number to the one or more electronic control units, such that the one or more electronic control units respectively read a corresponding variable value and respectively provide a feedback to the first electronic control unit. The first electronic control unit is configured to screen one or more variable values according to one or more feedbacks.

In an embodiment of the present disclosure, when the first variable is a specific variable, the first variable is stored to a plurality of positions when the first electronic control writes the first variable.

In an embodiment of the present disclosure, each of the plurality of electronic control units has a respective memory EEPROM, and each of the plurality of electronic control units performs a write operation and a read operation on the respective memory EEPROM.

In an embodiment of the present disclosure, the plurality of electronic control units include at least two of a vehicle control unit, a motor control unit, a battery management system and a meter.

With the electronic control system of a vehicle according to embodiments of the present disclosure, each electronic control unit may realize to share hardware resources (such as respective storage units), thereby improving a usage rate of the electronic control system resources, lowering cost and improving reliability of variable storage, effectively reducing a probability of a read/write error to/from EEPROM, and improving reliability of data stored in the EEPROM.

It is to be illustrated that, a specific implementation of the electronic control system of the vehicle provided in embodiments of the present disclosure is similar to a specific implementation of the method for storing data in an electronic control system of the vehicle provided in embodiments of the present disclosure, and may be referred to descriptions corresponding to the method in detail, which is not elaborated for redundancy reduction.

Embodiments of the present disclosure further provide a device. The device includes one or more processors, a memory and one or more programs. The one or more programs are stored in the memory. When the one or more programs are executed by the one or more processors, the method for storing data in an electronic control system of a vehicle according to above embodiments is executed.

Embodiments of the present disclosure further provide a non-volatile computer storage medium. The computer storage medium has one or more programs stored therein. When the one or more programs are executed by a device, the method for storing data in an electronic control system of a vehicle according to above embodiments is executed by the device.

In addition, other constitutes and functions of a system for storing data in an electronic control system of a vehicle and the non-volatile computer storage medium provided in embodiments of the present disclosure are known for those skilled in the art, which are not elaborated for redundancy reduction.

It is to be understood that, each part of the present disclosure may be realized by hardware, software, firmware or a combination thereof. In the above implementations, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

## Claims

1. A method for storing data in an electronic control system for a vehicle, wherein the electronic control system comprises a plurality of electronic control units, the plurality of electronic control units communicating with each other via a bus, each of the plurality of electronic control units has a respective memory EEPROM, electrically erasable programmable read only memory, and each of the plurality of electronic control units performs a write operation and a read operation on the respective memory EEPROM,
being **characterized in that**, the method comprises:
writing (S101), by a first electronic control unit of the plurality of electronic control units, a first variable, and sending a storage request message to a remaining of the plurality of electronic control units, such that the remaining of the plurality of electronic control units respectively determines whether to allow to store the first variable and, respectively, sends a first response message to the first electronic control unit;
when determining, by the first electronic control unit according to the first response message, that one or more second electronic control units from the remaining of the plurality of electronic control units allows
to store the first variable, sending (S102), by the first electronic control unit, a data frame to the one or more second electronic control units, such that the one or more second electronic control units respectively write data contained in the data frame and a serial number of a node of the bus, and respectively provide a feedback to the first electronic control unit, wherein the data contained in the data frame comprises a variable serial number of the first variable and a variable value of the first variable; and
writing (S103), by the first electronic control unit according to the feedback, a corresponding serial number of the node of the bus and the variable serial number of the first variable to the first electronic control unit.

2. The method according to claim 1, further comprising:
reading, by the first electronic control unit of the plurality of electronic control units, the serial number of the node of the bus, the variable serial number and the variable value, and sending a read request message to the remaining of the plurality of electronic control units, such that the remaining of the plurality of electronic control units, respectively, determines whether to allow the first electronic control unit to read, and, respectively, sends a second response message to the first electronic control unit;
when determining, by the first electronic control unit according to the second response message, that one or more third electronic control units from the remaining of the plurality of electronic control units allows the first electronic control unit to read, sending, by the first electronic control unit, the variable serial number to the one or more third electronic control units, such that the one or more third electronic control units, respectively, reads a corresponding variable value and, respectively, provides a feedback to the first electronic control unit; and
screening one or more variable values by the first electronic control unit according to one or more of the feedback.

3. The method according to claim 1, further comprising:
when the first variable is a specific variable, storing the first variable to a plurality of positions in the EEPROM when writing the first variable by the first electronic control unit.

4. The method according to claim 1, wherein the plurality of electronic control units comprises at least two of a vehicle control unit, a motor control unit, a battery management system and a meter.

5. An electronic control system for a vehicle, the electronic control system comprising a plurality of electronic control units, the plurality of electronic control units being adapted to communicate with each other via a bus, each of the plurality of electronic control units has a respective memory EEPROM, electrically erasable programmable read only memory, and each of the plurality of electronic control units being adapted to perform a write operation and a read operation on the respective memory EEPROM, the electronic control system being **characterized in that**,
a first electronic control unit of the plurality of electronic control units is configured to send a storage request message to a remaining of the plurality of electronic control units when writing a first variable, such that the remaining of the plurality of electronic control units respectively determines whether to allow to store the first variable and, respectively, sends a first response message to the first electronic control unit; and when the first electronic control unit determines that one or more second electronic control units from the remaining of the plurality of electronic control units allows to store the first variable according to the first response message, the first electronic control unit is configured to send a data frame to the one or more second electronic control units, such that the one or more second electronic control units, respectively, writes data contained in the data frame and a serial number of a node of the bus and, respectively, provides a feedback to the first electronic control unit, wherein the data contained in the data frame comprises a variable serial number of the first variable and a variable value of the first variable; and the first electronic control unit is configured to write the corresponding serial number of a node of the bus and the variable serial number of the first variable to the first electronic control unit according to the feedback.

6. The electronic control system according to claim 5, wherein the first electronic control unit is further configured to send a read request message to the remaining of the plurality of electronic control units when reading the serial number of the node of the bus, the variable serial number and the variable value, such that the remaining of the plurality of electronic control units, respectively, determines whether to allow the first electronic control unit to read, and, respectively, sends a second response message to the first electronic control unit; and when the first electronic control unit determines that one or more third electronic control units from the remaining of the plurality of electronic control units allows the first electronic control unit to read according to the second response message, the first electronic control unit is configured to send the variable serial number to the one or more third electronic control units, such that the one or more third electronic control units respectively reads a corresponding variable value and respectively provides a feedback to the first electronic control unit; and the first electronic control unit is configured to screen one or more variable values according to one or more feedbacks.

7. The electronic control system according to claim 5, wherein when the first variable is a specific variable, the first variable is stored to a plurality of positions in the EEPROM when the first electronic control writes the first variable.

8. The electronic control system according to claim 5, wherein the plurality of electronic control units comprises at least two of a vehicle control unit, a motor control unit, a battery management system and a meter.

9. A device, comprising:
one or more processors,
a memory,
one or more programs, wherein the one or more programs are stored in the memory, so that when the one or more programs are executed by the one or more processors, the device is adapted to execute the method for storing data in an electronic control system of a vehicle according to any one of claims 1 to 4.

10. A non-volatile computer storage medium, wherein the computer storage medium has one or more programs stored therein, and when the one or more programs are executed by processing means of a device, the method for storing data in an electronic control system of a vehicle according to any one of claims 1 to 4 is executed by the device.

## Patentansprüche

1. Verfahren zum Speichern von Daten in einem elektronischen Steuersystem für ein Fahrzeug, wobei das elektronische Steuersystem mehrere elektronische Steuereinheiten umfasst, die mehreren elektronischen Steuereinheiten über einen Bus miteinander kommunizieren, jede der mehreren elektronischen Steuereinheiten einen jeweiligen EEPROM-Speicher, elektrisch löschbaren programmierbaren Festwertspeicher, aufweist und jede der mehreren elektronischen Steuereinheiten eine Schreiboperation und eine Leseoperation in den jeweiligen EEPROM-Speicher ausführt,
**dadurch gekennzeichnet, dass** das Verfahren Folgendes umfasst:
Schreiben (S101) durch eine erste elektronische Steuereinheit der mehreren elektronischen Steuereinheiten einer ersten Variable und Senden einer Speicheranforderungsnachricht an eine verbleibende der mehreren elektronischen Steuereinheiten, so dass die verbleibende der mehreren elektronischen Steuereinheiten jeweils bestimmt, ob zu erlauben ist, die erste Variable zu speichern, und jeweils eine erste Antwortnachricht an die erste elektronische Steuereinheit sendet;
wenn durch die erste elektronische Steuereinheit gemäß der ersten Antwortnachricht bestimmt wird, dass eine oder mehrere zweite elektronische Steuereinheiten von den verbleibenden der mehreren elektronischen Steuereinheiten erlauben, die erste Variable zu speichern, Senden (S102) durch die erste elektronische Steuereinheit eines Datenrahmens an die eine oder die mehreren zweiten elektronischen Steuereinheiten, so dass die eine oder die mehreren zweiten elektronischen Steuereinheiten jeweils die in dem Datenrahmen erhaltenen Daten und eine laufende Nummer eines Knotens des Busses schreiben und jeweils eine Rückmeldung der ersten elektronischen Steuereinheit bereitstellen, wobei die in dem Datenrahmen enthaltenen Daten eine variable laufende Nummer der ersten Variable und einen variablen Wert der ersten Variable umfassen; und
Schreiben (S103) durch die erste elektronische Steuervorrichtung gemäß der Rückmeldung einer entsprechenden laufenden Nummer des Knotens des Busses und der variablen laufenden Nummer der ersten Variable in die erste elektronische Steuereinheit.

2. Verfahren nach Anspruch 1, das ferner Folgendes umfasst:
Lesen durch die erste elektronische Steuereinheit der mehreren elektronischen Steuereinheiten der laufenden Nummer des Knotens des Busses, der variablen laufenden Nummer und des variablen Wertes und Senden einer Leseanforderungsnachricht an die verbleibenden der mehreren elektronischen Steuereinheiten, so dass die verbleibenden der mehreren elektronischen Steuereinheiten jeweils bestimmen, ob der erste elektronische Steuereinheit zu erlauben ist, zu lesen, und jeweils eine zweite Antwortnachricht an die erste elektronische Steuereinheit senden; und
wenn durch die erste elektronische Steuereinheit gemäß der zweiten Antwortnachricht bestimmt wird, dass eine oder mehrere dritte elektronische Steuereinheiten von den verbleibenden der mehreren elektronischen Steuereinheiten der ersten elektronischen Steuereinheit erlauben, zu lesen, Senden durch die erste elektronische Steuereinheit der variablen laufenden Nummer an die eine oder die mehreren dritten elektronischen Steuereinheiten, so dass die eine oder die mehreren dritten elektronischen Steuereinheiten jeweils einen entsprechenden variablen Wert lesen und jeweils eine Rückmeldung der ersten elektronischen Steuereinheit bereitstellen; und
Abschirmen eines oder mehrerer variabler Werte durch die erste elektronische Steuereinheit gemäß einer oder mehrerer der Rückmeldungen.

3. Verfahren nach Anspruch 1, das ferner Folgendes umfasst:
wenn die erste Variable eine spezifische Variable ist, Speichern der ersten Variable an mehreren Positionen in dem EEPROM, wenn die erste Variable durch die erste elektronische Steuereinheit geschrieben wird.

4. Verfahren nach Anspruch 1, wobei die mehreren elektronischen Steuereinheiten wenigstens zwei einer Fahrzeugsteuereinheit, einer Motorsteuereinheit, eines Batteriemanagementsystems und eines Messgeräts umfassen.

5. Elektronisches Steuersystem für ein Fahrzeug, wobei das elektronische Steuersystem mehrere elektronische Steuereinheiten umfasst, die mehreren elektronischen Steuereinheiten dafür ausgelegt sind, über einen Bus miteinander zu kommunizieren, jede der mehreren elektronischen Steuereinheiten einen jeweiligen EEPROM-Speicher, elektrisch löschbaren programmierbaren Festwertspeicher, aufweist und jede der mehreren elektronischen Steuereinheiten dafür ausgelegt ist, eine Schreiboperation und eine Leseoperation in den jeweiligen EEPROM-Speicher auszuführen, wobei das elektronische Steuersystem **dadurch gekennzeichnet ist, dass**
eine erste elektronische Steuereinheit der mehreren elektronischen Steuereinheiten konfiguriert ist, eine Speicheranforderungsnachricht an eine verbleibende der mehreren elektronischen Steuereinheiten zu senden, wenn sie eine erste Variable schreibt, so dass die verbleibende der mehreren elektronischen Steuereinheiten jeweils bestimmt, ob zu erlauben ist, die erste Variable zu speichern, und jeweils eine erste Antwortnachricht an die erste elektronische Steuereinheit sendet; und, wenn die erste elektronische Steuereinheit gemäß der ersten Antwortnachricht bestimmt, dass eine oder mehrere zweite elektronische Steuereinheiten von den verbleibenden der mehreren elektronischen Steuereinheiten erlauben, die erste Variable zu speichern, die erste elektronische Steuereinheit konfiguriert ist, einen Datenrahmen an die eine oder die mehreren zweiten elektronischen Steuereinheiten zu senden, so dass die eine oder die mehreren zweiten elektronischen Steuereinheiten jeweils die in dem Datenrahmen enthaltenen Daten und eine laufende Nummer eines Knotens des Busses schreiben und jeweils eine Rückmeldung für die erste elektronische Steuereinheit bereitstellen, wobei die in dem Datenrahmen enthaltenen Daten eine variable laufende Nummer der ersten Variable und einen variablen Wert der ersten Variable umfassen und die erste elektronische Steuereinheit konfiguriert ist, die entsprechende laufende Nummer eines Knotens des Busses und die variable laufende Nummer der ersten Variable gemäß der Rückmeldung in die erste elektronische Steuereinheit zu schreiben.

6. Elektronisches Steuersystem nach Anspruch 5, wobei die erste elektronische Steuereinheit ferner konfiguriert ist, eine Leseanforderungsnachricht an die verbleibenden der mehreren elektronischen Steuereinheiten zu senden, wenn sie die laufende Nummer des Knotens des Busses, die variable laufende Nummer und den variablen Wert liest, so dass die verbleibenden der mehreren elektronischen Steuereinheiten jeweils bestimmen, ob der ersten elektronischen Steuereinheit zu erlauben ist, zu lesen, und jeweils eine zweite Antwortnachricht an die erste elektronische Steuereinheit senden; wobei, wenn die erste elektronische Steuereinheit gemäß der zweiten Antwortnachricht bestimmt, dass eine oder mehrere dritte elektronische Steuereinheiten von den verbleibenden der mehreren elektronischen Steuereinheiten der ersten elektronischen Steuereinheiten erlauben, zu lesen, die erste elektronische Steuereinheit konfiguriert ist, die variable laufende Nummer an die eine oder die mehreren dritten elektronischen Steuereinheiten zu senden, so dass die eine oder die mehreren dritten elektronischen Steuereinheiten jeweils einen entsprechenden variablen Wert lesen und jeweils eine Rückmeldung der ersten elektronischen Steuereinheit bereitstellen; wobei die erste elektronische Steuereinheit konfiguriert ist, einen oder mehrere variable Werte gemäß einer oder mehreren Rückmeldungen abzuschirmen.

7. Elektronisches Steuersystem nach Anspruch 5, wobei, wenn die erste Variable eine spezifische Variable ist, die erste Variable an mehreren Positionen in dem EEPROM gespeichert wird, wenn die erste elektronische Steuerung die erste Variable schreibt.

8. Elektronisches Steuersystem nach Anspruch 5, wobei die mehreren elektronischen Steuereinheiten wenigstens zwei einer Fahrzeugsteuereinheit, einer Motorsteuereinheit, eines Batteriemanagementsystems und eines Messgeräts umfassen.

9. Vorrichtung, die Folgendes umfasst:
einen oder mehrere Prozessoren,
einen Speicher,
ein oder mehrere Programme, wobei das eine oder die mehreren Programme in dem Speicher gespeichert sind, so dass, wenn das eine oder die mehreren Programme durch den einen oder die mehreren Prozessoren ausgeführt werden, die Vorrichtung dafür ausgelegt ist, das Verfahren zum Speichern von Daten in einem elektronische Steuersystem eines Fahrzeugs nach einem der Ansprüche 1 bis 4 auszuführen.

10. Nichtflüchtiges Computerspeichermedium, wobei das Computerspeichermedium ein oder mehrere darin gespeicherte Programme aufweist, wobei, wenn das eine oder die mehreren Programme durch die Verarbeitungsmittel einer Vorrichtung ausgeführt werden, das Verfahren zum Speichern von Daten in einem elektronischen Steuersystem eines Fahrzeugs nach einem der Ansprüche 1 bis 4 durch die Vorrichtung ausgeführt wird.

## Revendications

1. Procédé pour stocker des données dans un système de commande électronique pour un véhicule, où le système de commande électronique comprend une pluralité d'unités de commande électronique, la pluralité d'unités de commande électronique communiquant les unes avec les autres par l'intermédiaire d'un bus, chacune de la pluralité d'unités de commande électronique possède une mémoire morte programmable, effaçable électriquement, EEPROM, respective, et chacune de la pluralité d'unités de commande électronique effectue une opération d'écriture et une opération de lecture sur la mémoire EEPROM respective,
le procédé étant **caractérisé en ce qu'**il comprend :
l'écriture (S101), par une première unité de commande électronique de la pluralité d'unités de commande électronique, d'une première variable, et l'envoi d'un message de demande de stockage à une unité restante de la pluralité d'unités de commande électronique, de sorte que l'unité restante de la pluralité d'unités de commande électronique détermine respectivement s'il faut permettre de stocker la première variable et, respectivement, envoie un premier message de réponse à la première unité de commande électronique ;
lorsqu'il est déterminé, par la première unité de commande électronique, conformément au premier message de réponse, qu'une ou plusieurs deuxièmes unités de commande électronique parmi le reste de la pluralité d'unités de commande électronique permet le stockage de la première variable, l'envoi (S102), par la première unité de commande électronique, une trame de données aux une ou plusieurs deuxièmes unités de commande électronique, de sorte que les une ou plusieurs deuxièmes unités de commande électronique écrivent respectivement des données contenues dans la trame de données et un numéro de série d'un nœud du bus, et fournissent respectivement un retour d'informations à la première unité de commande électronique, où les données contenues dans la trame de données comprennent un numéro de série variable de la première variable et une valeur variable de la première variable ; et
l'écriture (S103), par la première unité de commande électronique en fonction du retour d'informations, d'un numéro de série du nœud du bus et le numéro de série variable de la première variable à la première unité de commande électronique.

2. Procédé selon la revendication 1, comprenant en outre :
la lecture, par la première unité de commande électronique de la pluralité d'unités de commande électronique, du numéro de série du nœud du bus, du numéro de série variable et de la valeur variable, et l'envoi d'un message de demande de lecture au reste de la pluralité d'unités de commande électronique, de sorte que le reste de la pluralité d'unités de commande électronique détermine respectivement s'il faut autoriser la lecture par la première unité de commande électronique, et envoie respectivement un deuxième message de réponse à la première unité de commande électronique ;
lorsqu'il est déterminé, par la première unité de commande électronique en fonction du deuxième message de réponse, qu'une ou plusieurs troisièmes unités de commande électronique parmi le reste de la pluralité d'unités de commande électronique permettent la lecture par la première unité de commande électronique, l'envoi, par la première unité de commande électronique, du numéro de série variable aux une ou plusieurs troisièmes unités de commande électronique, de sorte que les une ou plusieurs troisièmes unités de commande électronique lisent respectivement une valeur variable correspondante et fournissent respectivement un retour d'informations à la première unité de commande électronique ; et
le filtrage d'une ou plusieurs valeurs variables par la première unité de commande électronique en fonction d'un ou plusieurs retours des retours d'informations.

3. Procédé selon la revendication 1, comprenant en outre :
lorsque la première variable est une variable spécifique, le stockage de la première variable à une pluralité de positions dans l'EEPROM lors de l'écriture de la première variable par la première unité de commande électronique.

4. Procédé selon la revendication 1, dans lequel la pluralité d'unités de commande électronique comprend au moins deux éléments parmi les suivants : une unité de commande de véhicule, une unité de commande de moteur, un système de gestion de batterie et un compteur.

5. Système de commande électronique pour un véhicule, le système de commande électronique comprenant une pluralité d'unités de commande électronique, la pluralité d'unités de commande électronique étant adaptée pour communiquer les unes avec les autres par l'intermédiaire d'un bus, chacune de la pluralité d'unités de commande électronique possède une mémoire morte programmable, effaçable électriquement, EEPROM, respective, et chacune de la pluralité d'unités de commande électronique étant adaptée pour effectuer une opération d'écriture et une opération de lecture sur la mémoire EEPROM respective, le système de commande étant **caractérisé en ce que** :
une première unité de commande électronique de la pluralité d'unités de commande électronique est configurée pour envoyer un message de demande de stockage au reste de la pluralité d'unités de commande électronique lors de l'écriture d'une première variable, de sorte que le reste de la pluralité d'unités de commande électronique détermine respectivement s'il faut autoriser le stockage de la première variable et, respectivement, envoie un premier message de réponse à la première unité de commande électronique ; et, lorsque la première unité de commande électronique détermine qu'une ou plusieurs deuxièmes unités de commande électronique parmi le reste de la pluralité d'unités de commande électronique permettent le stockage de la première variable en fonction du premier message de réponse, la première unité de commande électronique est configurée pour envoyer une trame de données aux une ou plusieurs deuxièmes unités de commande électronique, de sorte que les une ou plusieurs deuxièmes unités de commande électronique écrivent respectivement les données contenues dans la trame de données et un numéro de série d'un nœud du bus et fournissent respectivement un retour d'informations à la première unité de commande électronique, où les données contenues dans la trame de données comprennent un numéro de série variable de la première variable et une valeur variable de la première variable ; et la première unité de commande électronique est configurée pour écrire le numéro de série correspondant d'un nœud du bus et le numéro de série variable de la première variable sur la première unité de commande électronique en fonction du retour d'informations.

6. Système de commande électronique selon la revendication 5, dans lequel la première unité de commande électronique est en outre configurée pour envoyer un message de demande de lecture au reste de la pluralité d'unités de commande électronique lors de la lecture du deuxième numéro de série du nœud du bus, du numéro de série variable et de la valeur variable, de sorte que le reste de la pluralité d'unités de commande électronique détermine respectivement s'il faut permettre la lecture à la première unité de commande électronique, et envoie respectivement un deuxième message de réponse à la première unité de commande électronique ; et, lorsque la première unité de commande électronique détermine qu'une ou plusieurs troisièmes unités de commande électronique parmi le reste de la pluralité d'unités de commande électronique permettent la lecture par la première unité de commande électronique selon le deuxième message de réponse, la première unité de commande électronique est configurée pour envoyer le numéro de série variable aux une ou plusieurs troisièmes unités de commande électronique, de sorte que les une ou plusieurs troisièmes unités de commande électronique lisent respectivement une valeur variable correspondante et fournissent respectivement un retour d'informations à la première unité de commande électronique ; et la première unité de commande électronique est configurée pour filtrer une ou plusieurs valeurs variables selon un ou plusieurs retours d'informations.

7. Système de commande électronique selon la revendication 5, dans lequel, lorsque la première variable est une variable spécifique, la première variable est stockée à une pluralité de positions dans l'EEPROM lorsque la première commande électronique écrit la première variable.

8. Système de commande électronique selon la revendication 5, dans lequel la pluralité d'unités de commande électronique comprend au moins deux éléments parmi les suivants : une unité de commande de véhicule, une unité de commande de moteur, un système de gestion de batterie et un compteur.

9. Dispositif, comprenant :
un ou plusieurs processeurs,
une mémoire,
un ou plusieurs programmes, où les un ou plusieurs programmes sont stockés dans la mémoire de sorte que, lorsque les un ou plusieurs programmes sont exécutés par les un ou plusieurs processeurs, le dispositif est adapté pour exécuter le procédé de stockage de données dans un système de commande électronique d'un véhicule selon l'une quelconque des revendications 1 à 4.

10. Support de stockage informatique non volatile, dans lequel le support de stockage informatique comporte un ou plusieurs programmes stockés y étant stockés et, lorsque les un ou plusieurs programmes sont exécutés par des moyens de traitement d'un dispositif, le procédé de stockage de données dans un système de commande électronique d'un véhicule selon l'une quelconque des revendications 1 à 4 est exécuté par le dispositif.
